# EUROPEAN PATENT SPECIFICATION

(11) **EP 4 552 726 B1**
(45) Date of publication and mention of the grant of the patent: **22.04.2026**
(21) Application number: 24207504.2
(22) Date of filing: 18.10.2024
(51) Int. Cl.: B01D 53/04, B01D 53/06, B01D 53/08

(54) **MODULAR TRUE MOVING BED APPARATUS FOR GAS SEPARATION AND METHOD OF SAME**
MODULARE ECHTE WANDERBETTVORRICHTUNG ZUR GASTRENNUNG UND VERFAHREN DAFÜR
APPAREIL À LIT MOBILE VÉRITABLE MODULAIRE POUR SÉPARATION DE GAZ ET SON PROCÉDÉ

(30) Priority: 09.11.2023 IN 202321076710
(43) Date of publication of application: 14.05.2025
(73) Proprietor: Tata Consultancy Services Limited, Maharashtra (IN)
(72) Inventor: Badhan, Navneet Singh, 411057 Pune - Maharashtra (IN); Chaudhary, Ayush, 411057 Pune - Maharashtra (IN); Subramanian, Sivakumar, 411057 Pune - Maharashtra (IN); Suhail, Mohammed, 411057 Pune - Maharashtra (IN); Runkana, Venkataramana, 411057 Pune - Maharashtra (IN); Rao, Davuluri Prahlada, 500049 Miyapur, Hyderabad (IN)
(74) Representative: Goddar, Heinz J.

(56) References cited:
- JP-A- 2009 178 711
- US-A1- 2022 355 238
- US-A1- 2023 241 546

## Description

### TECHNICAL FIELD

The disclosure herein generally relates to gas separation, and, more particularly, to modular true moving bed apparatus for gas separation and method of same.

### BACKGROUND

True moving bed (TMB) has acquired significative importance in industrial environments due to its ability to efficiently separate complex systems. Its applications range from petrochemical to fine chemical and pharmaceutical industries. True Moving Bed (TMB) improves selectivity towards a given product to integrate reaction and separation in the same unit while potentially reducing capital investment and energy consumption. TMB is also used for gas separation, allowing gas separation and purification by separating pure components from a mixture of components, a process which is of critical importance in the chemical industry.

Traditional gas separation processes utilize absorption technique to capture carbon dioxide from flue gas. Such absorption techniques are very energy intensive. On the other hand, adsorption technique that uses porous material to separate pure components from a gaseous mixture is more energy efficient process that can be used for gas separation and purification. Due to the existence of a variety of adsorbents that can selectively adsorb components of interest, adsorption finds applications in a variety of processes such as natural gas purification, air separation, carbon capture, and the like.

The use of true moving bed adsorption reactors for gas separation and purification encounters several challenges, including particle attrition as an inherent problem. However, existing reactors such as rotary bed has addressed the problem in which particles do not move relative to each other. The complexity of processes renders this reactor configuration impractical. Further, existing reactors also lack in maintaining continuity of operations as they shut down to replace depleted adsorbent bed with new sorbent bed, resulting in disruptive maintenance cycles. One of the prior art JP2009178711A discloses improving the removal rate of volatile organic substances generated at industrial sites, significantly reduce the size of the system, and increase the concentration ratio. In a continuous volatile organic substance concentrating apparatus for concentrating volatile organic substances through an adsorption process and a desorption process, a moving bed chamber in which modules for adsorbing volatile organic substances are disposed. B, and the moving bed chamber is provided with an adsorption bed line 25 on one side so that a volatile organic substance is supplied and adsorbed to the module, and the other side of the moving bed chamber is a module. A desorption-cooling bed line 26 is provided for performing a desorption process for desorbing the volatile organic substances adsorbed on the substrate and a cooling process for cooling the module that has undergone the desorption process. Another prior art US20230241546A1 discloses a system for gas adsorbate capture has an adsorption reactor(s) configured for receiving an adsorbate gas flow. A regeneration reactor(s) is configured for receiving a regenerative fluid flow. A plurality of individual sorbent cells are in a generally continuous cycle between the adsorption reactor and the regeneration reactor. A group of the individual sorbent cells may form an adsorption moving bed in the adsorption reactor to capture the adsorbate from the gas flow. Another prior art US20220355238A1 discloses a system for capturing atmospheric carbon dioxide, including a track and a plurality of panels moveably coupled to the track, each panel having a sorbent material. The system also includes a harvest house having a sorbent regeneration system and at least one aperture, and a propulsion system coupled to the track and configured to move each panel in a circuit having a collection phase and a release phase. For each panel, the collection phase of the circuit includes the panel moving along the track to expose the sorbent material to an airflow and allow the sorbent material to capture carbon dioxide. For each panel, the release phase of the circuit includes the panel being sufficiently enclosed inside the harvest house that the sorbent regeneration system may operate on the sorbent material to release captured carbon dioxide from the sorbent material and form an enriched gas.

### SUMMARY

Embodiments of the present disclosure present technological improvements as solutions to one or more of the above-mentioned technical problems recognized by the inventors in conventional systems. The invention is set out in appended claim set.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates a modular true moving bed apparatus for gas separation constructed in accordance with some embodiments of the present disclosure.
FIG.2 illustrates a schematic process configuration of the modular true moving bed apparatus for gas separation using the system of FIG.1, in accordance with some embodiments of the present disclosure.
FIG.3 illustrates a schematic view of an adsorption zone for gas separation process using the system of FIG.1, in accordance with some embodiments of the present disclosure.
FIG.4 illustrates a schematic view of a desorption zone operating in pressure swing adsorption for gas separation process using the system of FIG.1, in accordance with some embodiments of the present disclosure.
FIG.5 illustrates a schematic view of a cooling zone and a maintenance zone for gas separation process using the system of FIG.1, in accordance with some embodiments of the present disclosure.
FIG.6A and FIG.6B illustrates a top view and an isometric view of a plurality of carriages inside the adsorption zone and exiting the adsorption zone, with the front end and rear end one-way valve opened while inside the zone and closed while exiting the zone using the system of FIG.1, in accordance with some embodiments of the present disclosure.
FIG.6C and FIG.6D illustrates a top view and an isometric view of the plurality of carriages inside the desorption zone and exiting the desorption zone, with the front end and rear end one-way valve opened using the system of FIG.1, in accordance with some embodiments of the present disclosure.
FIG.6E illustrates the carriage design for carrying the sorbent material through the plurality of zones via locomotion means using the system of FIG.1, in accordance with some embodiments of the present disclosure.
FIG.6F illustrates airtight casing around the apparatus with carriages moving on conveyor belt as a locomotion means using the system of FIG.1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the claims.

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

In conventional true moving bed reactor for gas separation, the adsorbent material or sorbent particles move from top to bottom under the effect of gravity, going through each adsorption zone, desorption zone, and cooling zone, where the feed moves counter-currently from bottom to top. The adsorbent material is transferred from bottom to top using a bucket elevator or a screw conveyor. Such configuration results in decreased pressure drop and shorter column length because of stationary reaction front inside the column. Major disadvantage of conventional moving bed reactor is particle attrition of adsorbent particles, resulting in lower particle life and increased cost of the process. Additionally, steam is used to directly heat the particles for desorption, leading to an additional step of dehydration followed by the cooling step before the particles are lifted to the top for the next cycle. The condensed steam also reduces the capacity of the adsorbent. Moreover, as the beds are interconnected without a partition, pressure swing for regeneration cannot be employed.

In traditional rotating bed reactor, particles are fixed in a circular bed that rotates to move the adsorbent particles through different zones of the gas separation process. This configuration was designed to separate CO2 from industrial flue gas. Another existing technology allows use of structured adsorbents in an intensified temperature swing adsorption (i-TSA) process. Here, the gas separation efficiency of the process depends upon the efficiency of the sealing mechanism to prevent leakage between different sections that operate at different pressure. This sealing and leakage across different sections are actually a major problem when using such reactor configuration. As the feed gas and the outlet gas ports are located near the walls of the reactor, the flow through the beds may suffer from channeling, leaving some section of the bed underutilized and making the absorption less effective if the gases were to find shorter ways through the bed. The embodiments of the present disclosure address the problem of particle attrition in modular true moving bed apparatus gas separation, preventing gas leakage across different zones and adsorbent maintenance problems associated with the current technologies.

### GLOSSARY

As used herein, "TMB" means "true moving bed."

As used herein, "raffinate" is a product stream pumped from the TMB during operation that corresponds to the least retained component.

As used herein, "carriage" means a container which carries a sorbent material.

As used herein, "sorbent material" is an eluent which absorbs or desorbs the target gas, and which is carried inside the carriage through the locomotion means.

As used herein, "adsorption zone" refers to the section of the bed where adsorption of a target gas from a gaseous mixture occurs.

As used herein, "desorption zone" refers to the section of the bed where desorption of the target gas from the sorbent bed occurs.

As used herein, "locomotion means" is a type of mechanism enabling the carriage to move through the process zones.

As used herein, "static gas-tight enclosure" is an external outer jacket preventing gas leakage.

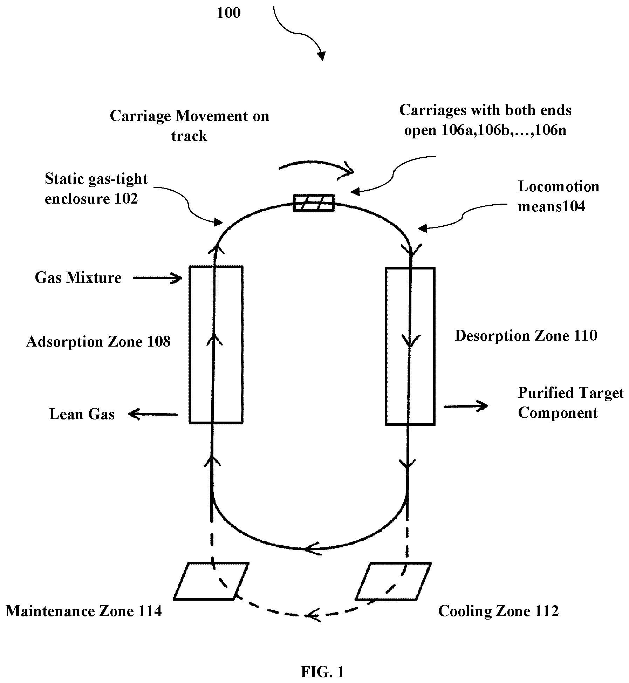

Embodiments herein provide a modular true moving bed apparatus for gas separation and method of same. The modular true moving bed apparatus may be alternatively referred to as apparatus or system. The apparatus 100 provides an efficient method for gas separation in which a sorbent material is carried in a plurality of carriages. The apparatus provides solution for challenges in existing techniques, proving minimal particle attrition since the sorbent particles inside the plurality of carriages have no relative motion among themselves during traversal through various zones. The disclosed system is further explained with the method as described in conjunction with FIG.1 to FIG.6F below.

Referring now to the drawings, and more particularly to FIG.1 through FIG.6F, where similar reference characters denote corresponding features consistently throughout the figures, there are shown preferred embodiments, and these embodiments are described in the context of the following exemplary system and/or method.

FIG.1 illustrates a modular true moving bed apparatus for gas separation constructed in accordance with some embodiments of the present disclosure. The modular true moving bed apparatus for gas separation 100 comprises a static gas-tight enclosure 102, a locomotion means 104, a plurality of carriages (106a,106b,..,106n), and a plurality of zones comprising an adsorption zone 108, a desorption zone 110, a cooling zone 112 and a maintenance zone 114.

The present disclosure contemplates towards gas separation using sorbent particles or structured sorbents, with no relative motion among themselves, carried in the plurality of carriages (106a,106b,..,106n) capable of traversing via the locomotion means 104. Each of the adsorption zone 108, the desorption zone 110, the cooling zone 112 and the maintenance zone 114 are connected sequentially and the plurality of carriages (106a,106b,...,106n) carrying the sorbent material move through each zone using the locomotion means 104.

The sorbent material may include for example structured sorbents called monoliths, or particulate adsorbents that are packed inside carriages with each carriage moving sequentially through each zone in the gas separation process. Each carriage is a packed moving bed with, but not limited to, circular cross-section to minimize mechanical and thermal stress and optimize the heat transfer characteristics of the process.

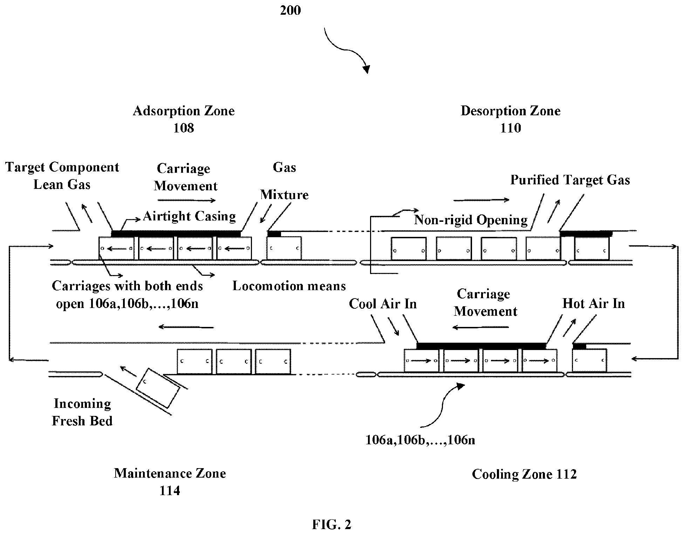

FIG.2 illustrates a schematic process configuration of the modular true moving bed apparatus for gas separation using the system of FIG.1, in accordance with some embodiments of the present disclosure. The apparatus 200 may be an example of the apparatus 100 (FIG.1). In an example embodiment, the apparatus 200 may be embodied in, or is in direct communication with the apparatus, for example the apparatus 100 (FIG.1). The apparatus 200 comprises of the static gas-tight enclosure 102, the locomotion means 104, the plurality of carriages (106a,106b,..,106n), the adsorption zone 108, the desorption zone 110, the cooling zone 112 and the maintenance zone 114.

The static gas-tight enclosure 102 of the system 200 is an outer jacket preventing gas leakage to the external environment. The locomotion means 104 and the plurality of carriages (106a,106b,...,106n ) are enclosed with tight tolerances such that there is no gas leakage across sections. The one-way valve-like provision is used for opening and closing the ends of each carriage to prevent leakage of the target gas from each zone subsequently.

The locomotion means 104 provides a directional movement to move the plurality of carriages (106a,106b,...,106n) from each zone towards subsequent zones. The locomotion means 104 may have a track working under a mechanical principle and in continuous motion. The locomotion means 104 may consist of a set of rollers that rotate to facilitate carriage motion or consist of rollers fixed to each carriage. The locomotion means 104 provides the mechanism to adjust distance between two consecutive carriages while traversing the plurality of zones of the gas separation process as less gap is required between carriages in the adsorption zone to prevent gas bypass. This facilitates sequential passage of the target gas through each carriage and relatively more gap is desirable in the desorption zone 110 operating in a vacuum swing adsorption (VSA) and/or pressure swing adsorption (PSA) facilitating evacuation of the target gas from each carriage.

The plurality of carriages (106a,106b,...,106n) traverse via the locomotion means 104. Each carriage includes a front end having an inlet one-way valve and a rear having an outlet one-way valve, and each carriage carries the sorbent material. Here, the sorbent material remain fixed inside each carriage that moves via the locomotion means 104, traversing through each zone among the plurality of zones. Since the sorbent particles do not move relative to each other, there is no risk of particle attrition, and it is possible to have high performing structured adsorbents (monoliths) and standard adsorbents packing in the moving bed.

The sorbent material residing inside the plurality of carriages (106a,106b,...,106n) have no relative motion among themselves, resulting in minimal particle attrition.

The plurality of zones comprises the adsorption zone 108, the desorption zone 110, which are connected in series in a closed loop. The plurality of carriages (106a,106b,...,106n) traverse through the plurality of zones, where each zone comprises at least one inlet port and at least one outlet port to process feed gas within each zone, except for the desorption zone operating in VSA since only outlet port(s) is required to evacuate each carriage. For example, each of the zone, except desorption zone as explained above may have one or more inlet ports to allow for entry of the feed or recycled gas. Also, each zone may have one or more outlet ports to allow for the exit of the raffinate from each zone.

The plurality of carriages (106a,106b,...,106n) carrying the sorbent material traverse via the locomotion means 104 through each zone during the gas separation process. Each carriage moves along the track but not limited to elliptical or circular via the locomotion means 104 that is used to speed up or slow down each carriage to maintain a suitable gap between them as required in different zones in the process based on factors such as adsorption time and desorption time.

The track of the locomotion means 104 may be equipped with, for example, conveyor belts, carriages with wheels with each carriage locomotion controlled independent of the other. Moreover, the track can be suitably inclined to increase or decrease the speed of each carriage decreasing the amount of energy required to move the plurality of carriages. The track geometry may be optimized to have long linear sections that are connected by acceptable curved sections depending on the desired layouts to a particular deployment environment.

The adsorption zone 108 receives a gaseous mixture through each inlet port, and each carriage carrying the sorbent material selectively adsorbs the target gas from the gaseous mixture while traversing via the locomotion means 104 in counter-current direction to the feed movement.

The desorption zone 110 desorbs the target gas from the sorbent material present inside each carriage.

Further, in each zone a sealing mechanism is applied to seal the inlet one-way valve and the outlet one-way valve of each carriage carrying the sorbent material during exit from at least one zone to prevent leakage with the adjoining zones.

In another embodiment, the plurality of zones comprises at least one of: (i) a cooling zone 112, or (ii) a maintenance zone 114, wherein the adsorption zone and the desorption zone are connected with the cooling zone and the maintenance zone in series of the closed loop.

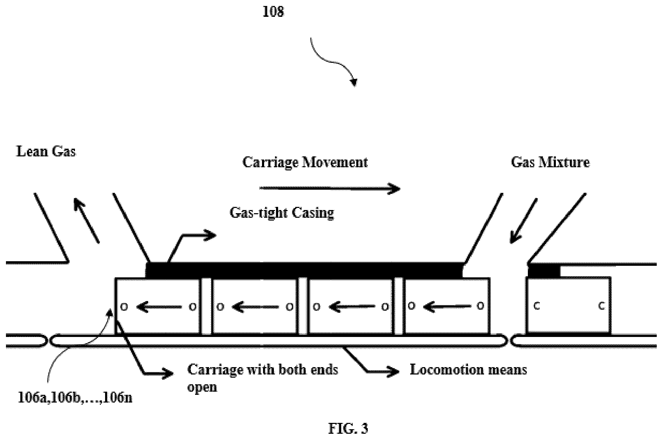

FIG.3 illustrates a schematic view of an adsorption zone for gas separation process using the system of FIG.1, in accordance with some embodiments of the present disclosure. Referring now FIG.2 and FIG.3 in the adsorption zone, the plurality of carriages (106a,106b,...,106n) carrying the sorbent material traverses via the locomotion means 104 with minimal gap between two or more carriages. The inlet one-way valve and the outlet one-way valve of each carriage carrying the sorbent material remains open. Further at least one of the adsorption zone 108 receives the gaseous mixture from which the sorbent material present inside each carriage absorbs the target gas(es). The raffinate from the gaseous mixture is discharged through at least one outlet port of the adsorption zone 108.

The plurality of carriages (106a,106b,...,106n) hosting the adsorbent material may have shutter like arrangements that can open and close located in the front end and the rear end to allow for entry and exit of gas flow. When both the ends are closed, it shall isolate the carriage from processing any gas, thus preventing gas leakage. The adsorption zone 108 consists of carriages moving in series, with no gaps between them moving in counter-current direction to the feed. Both the ends of each carriage in the adsorption zone are open to allow the gas to flow sequentially through the adsorbent bed in each carriage. As a saturated carriage exits the adsorption zone 108, both its ends are closed to seal the carriage and prevent any further entry of gas. The plurality of carriages (106a,106b,...,106n) exiting the adsorption zone 108 speed up to increase the gap with the immediately trailing carriage so that it becomes the first entry point of the feed gas stream, and to quickly pass at least one inlet port so that continuity of the process is maintained.

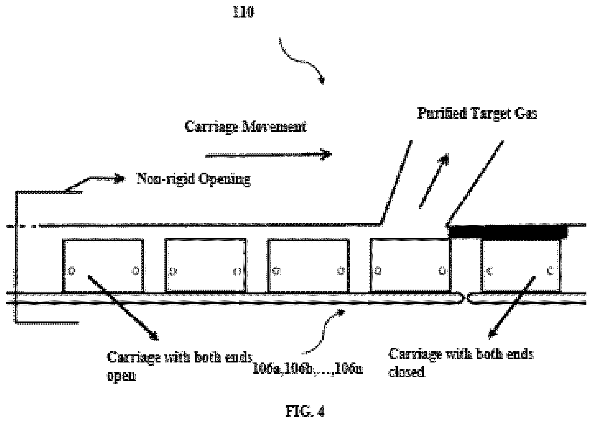

FIG.4 illustrates a schematic view of a desorption zone for gas separation process using the system of FIG.1, in accordance with some embodiments of the present disclosure.

In one embodiment, the modular true moving bed apparatus facilitates at least one of (i) a temperature swing adsorption, (ii) a pressure swing adsorption, (iii) a vacuum swing adsorption or (iv) a combination thereof. Here, the temperature swing adsorption allows desorption of the target gas by passing the hot gas which enters via the inlet port(s) and exits via the outlet port(s) of the desorption zone, moving against the direction of the carriage movement, the pressure swing adsorption allows desorption of the target gas by applying or maintaining lower pressure than used in the adsorption stage, and the vacuum swing adsorption allows desorption of the target gas by applying vacuum.

When each carriage reaches the desorption zone 108, both the inlet one-way valve and the outlet one-way valve are opened, and the gas is desorbed using at least one of the pressure swing adsorption, the vacuum swing adsorption and the temperature swing adsorption or the combination thereof. Heat is supplied directly since direct heating through mediums such as the steam or hot gases is more efficient. This would largely be driven by the type of adsorbent used. Additional equipment may be needed to separate the heating medium from the desorbed gas(es). Alternately, when the pressure swing adsorption or the vacuum swing adsorption is preferred, the pressure is lowered or maintaining sufficiently low pressure by suction fans should assist in regenerating the adsorbents. This would result in direct collection of the adsorbed gas(es). In some cases, concentration swing may be practiced using the eluent.

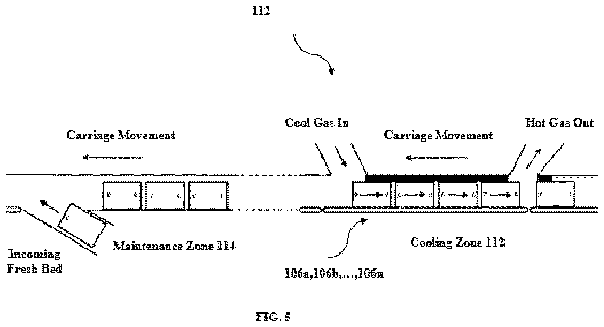

FIG.5 illustrates a schematic view of a cooling zone and a maintenance zone for gas separation process using the system of FIG.1, in accordance with some embodiments of the present disclosure. The desorption zone 110 is followed by the cooling zone 112, when necessary, in which the cooling gas flows in counter-current direction to cool the adsorbent bed getting it ready for the next cycle. The cooling zone 112 cools the sorbent material present inside each carriage using a cooling gas that enters via at least one inlet port and exits as warm gas via at least one outlet port, and the carriage have the front end one-way valve and the rear end one-way valve opened while moving in series via the locomotion means in counter-current direction. The maintenance zone 114 provides configuration aids for continuity of operations by replacing depleted carriages with new carriage using a sealing mechanism. This primarily removes the heat of adsorption that was released during the adsorption process and the heat supplied directly or indirectly during the desorption step.

Since the adsorption capacity may go down because of repeated use of the adsorbents over long period of time, the maintenance zone 114 provides configuration aids for continuity of operations by replacing depleted carriages with new carriage using a sealing mechanism. The maintenance zone 114 is used to replace carriages with reduced bed capacity with a fresh bed without disrupting the ongoing process by diverting the depleted carriages by using the sealing mechanism, for example, another track or a robotic arm. The plurality of carriages in the maintenance zone 114vfinally move to the adsorption zone 108 for the next cycle.

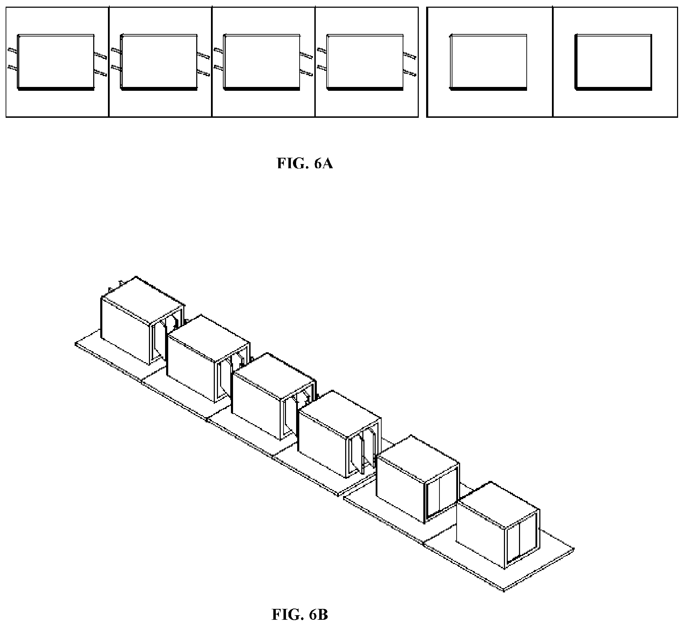

FIG.6A and FIG.6B illustrates a top view and an isometric view of a plurality of carriages inside the adsorption zone and exiting the adsorption zone, with the front end and rear end one-way valve opened while in the zone and closed while exiting the zone using the system of FIG.1, in accordance with some embodiments of the present disclosure.

In the adsorption zone 108, the plurality of carriages (106a,106b,...,106n) carrying the sorbent material traverse via the locomotion means 104. The front end and the rear end of each carriage are opened to allow for sequential passage of the gaseous mixture and to absorb the target gas from the gaseous mixture. As the saturated carriages exit, both the front end and the rear end are closed to seal each carriage thereby preventing any further entry of gas and leakage to the adjoining zone. Each carriage exiting the adsorption zone 108 speeds up to increase the gap with the immediately trailing carriage, quickly passing the adsorption inlet port(s) to maintain the continuity of the process.

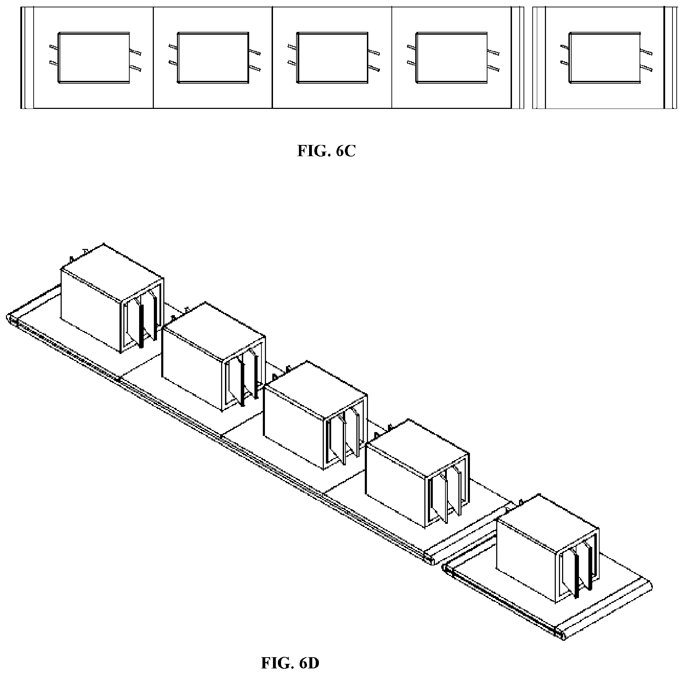

FIG.6C and FIG.6D illustrates a top view and an isometric view of the plurality of carriages inside the desorption zone and exiting the desorption zone, with the front end and rear end one-way valve opened using the system of FIG.1, in accordance with some embodiments of the present disclosure. In the desorption zone 110, the plurality of carriages(106a,106b,...,106n) carrying the sorbent material traverse via the locomotion means 104. When the plurality of carriages (106a,106b,...,106n) reach the desorption zone 110, the front end and the rear end of each carriage are opened to desorb the target gas from the gaseous mixture.

The target gas is desorbed using either pressure swing or vacuum swing or temperature swing adsorption or a combination thereof. Additional equipment may be required to separate the heating medium from the desorbed gas(es). Alternately, when the pressure swing adsorption or the vacuum swing adsorption is preferred, maintaining sufficiently low pressure by suction or draft fans assists in regenerating the adsorbents. This operation would result in the direct collection of the adsorbed gas(es).

It is noted, the gas separation process may not be limited in application of the pressure swing adsorption or the vacuum swing adsorption but can be extended to concentration swing with an eluent flow.

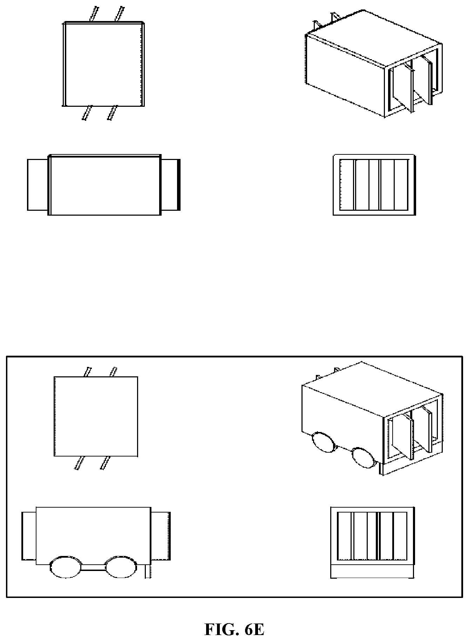

FIG.6E illustrates the carriage design for carrying the sorbent material through the plurality of zones via locomotion means using the system of FIG.1, in accordance with some embodiments of the present disclosure. The design of each carriage depends on the process requirements and process optimization. The cross-section of each carriage may be, but not limited to, circular. Such design depends upon the locomotion means 104 employed in the gas separation process. The track may consist of set of rollers or ball bearings which rotate to facilitate the movement of each carriage, or consist of the conveyor belt, in which case the bottom face of the carriages will be flat. In other example, each carriage itself may consist of wheels, which move on a flat track, hence facilitating independent locomotive control of each carriage.

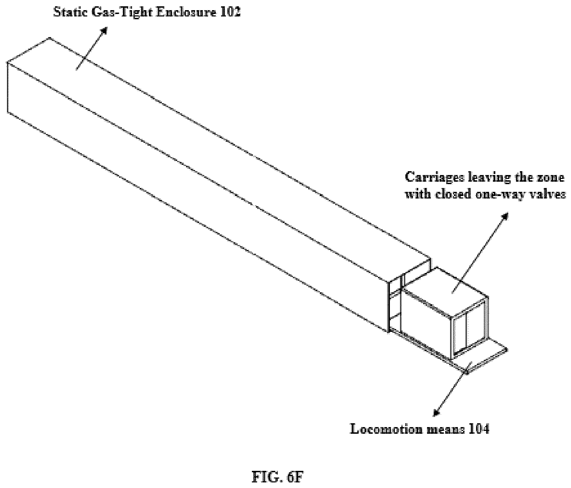

FIG.6F illustrates airtight casing around the apparatus with carriages moving on conveyor belt via locomotion means using the system of FIG.1, in accordance with some embodiments of the present disclosure. The airtight casing around the apparatus prevents gas leakage to the surroundings. The airtight casing minimizes the gas bypass in different zone to minimum, therefore close tolerance between the locomotion means, carriages and casing is required.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of gas separation. The embodiment, thus provides modular true moving bed apparatus for gas separation and method of same. Moreover, the embodiments herein further provides an efficient solution addressing the particle attrition problem in modular true moving bed apparatus gas separation, preventing gas leakage across different zones.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A modular true moving bed apparatus (100) for gas separation , comprising:
a static gas-tight enclosure (102) is an outer jacket preventing gas leakage to external environment;
a locomotion means (104);
a plurality of carriages (106a,106b,...,106n) capable of traversing via the locomotion means (104), wherein the locomotion means (104) and the plurality of carriages (106a,106b,...,106n) are enclosed in the static gas-tight enclosure (102) with tight tolerances such that there is no gas leakage across sections;
wherein each of the plurality of carriages (106a,106b,...,106n) comprises a front end having an inlet one-way valve, and a rear end having an outlet one-way valve, and each of the plurality of carriages carries a sorbent material, wherein the locomotion means (104) provides a mechanism to adjust a distance between two consecutive carriages from among the plurality of carriages while in motion; and
a plurality of zones comprising an adsorption zone (108) and a desorption zone (110), connected in series in a closed loop, wherein the plurality of carriages (106a,106b,...,106n) traverse through the plurality of zones, and each of the plurality of zones comprises at least one inlet port to feed a gaseous mixture and at least one outlet port to exit raffinate,
wherein each of the plurality of carriages(106a,106b,...,106n) carrying the sorbent material traverses via the locomotion means through each zone during the gas separation process,
wherein the adsorption zone (108) receives a gaseous mixture from at least one of the inlet port, and each of the plurality of carriages (106a,106b,...,106n) carrying the sorbent material adsorbs a target gas from the gaseous mixture while traversing via the locomotion means (104),
wherein the desorption zone (110) desorbs the target gas from the sorbent material present inside each of the plurality of carriages (106a,106b,...,106n), and
wherein a sealing mechanism seals the inlet one-way valve and the outlet one-way valve of each of the plurality of carriages carrying the sorbent material to prevent leakage in the adjoining zones.

2. The modular true moving bed apparatus (100) for gas separation of claim 1, wherein the plurality of carriages and the gaseous mixture move in counter-current direction in at least one of the zone.

3. The modular true moving bed apparatus (100) for gas separation of claim 1, wherein the plurality of carriages associated with the adsorption zone (108) carrying the sorbent material traverses via the locomotion means (104) with minimal gap between two or more carriages from among the plurality of carriages by,
opening the inlet one-way valve and the outlet one-way valve of each carriage carrying the sorbent material;
receiving via at least one inlet port of the adsorption zone (108) the gaseous mixture, and the sorbent material present inside each carriage adsorbs the target gas from the gaseous mixture; and
discharging raffinate of the gaseous mixture through at least one outlet port of the adsorption zone (108).

4. The modular true moving bed apparatus (100) for gas separation of claim 1, wherein in the desorption zone (110), the front end and the rear end of each carriage carrying the sorbent material is opened while traversing via the locomotion means, and the gap between two or more carriages is increased to desorb the target gas.

5. The modular true moving bed apparatus (100) for gas separation of claim 1, wherein the sorbent material residing inside the plurality of carriages have no relative motion among themselves, resulting in minimal particle attrition.

6. The modular true moving bed apparatus (100) for gas separation of claim 1, wherein the modular true moving bed apparatus facilitates at least one of (i) a temperature swing adsorption, (ii) a pressure swing adsorption, (iii) a vacuum swing adsorption or (iv) a combination thereof.

7. The modular true moving bed apparatus (100) for gas separation of claim 6, wherein in the desorption zone (110), (i) the temperature swing adsorption allows desorption of the target gas by passing a hot gas, (ii) the pressure swing adsorption allows desorption of the target gas by applying low pressure, and (iii) the vacuum swing adsorption allows desorption of the target gas by applying vacuum.

8. The modular true moving bed apparatus (100) for gas separation of claim 1, wherein the plurality of zones comprises at least one of: (i) a cooling zone (112), or (ii) a maintenance zone (114), wherein the adsorption zone (108) and the desorption zone (110) are connected with the cooling zone (112) and the maintenance zone (114) in series of the closed loop,
wherein the cooling zone (112) cools the sorbent material present inside each carriage using a cooling gas that enters via at least one inlet port and exits as warm gas via at least one outlet port, and the carriage have the front end one-way valve and the rear end one-way valve opened while moving in series via the locomotion means in counter-current direction, and
wherein the maintenance zone (114) provides configuration aids for continuity of operations by replacing depleted carriages with new carriage using a suitable mechanism.

9. A process for gas separation conducted at least in a modular true moving bed apparatus (100) for gas separation as claimed in claim 1, comprising:
moving by a plurality of carriages carrying a sorbent material through a plurality of zones via a locomotion means to reach at least one of an adsorption zone, and a desorption zone;
feeding via at least one inlet port of the adsorption zone, a gaseous mixture over the plurality of carriages carrying the sorbent material;
adsorbing a target gas from the gaseous mixture by the sorbent material while passing through the adsorption zone when the plurality of carriages are traversing via the locomotion means in the adsorption zone;
desorbing the target gas from the sorbent material present inside each carriage in the desorption zone; and
sealing using a suitable sealing mechanism, the inlet one-way valve and the outlet one-way valve of each carriage carrying the sorbent material during exit from at least one zone to prevent leakage with the adjoining zones.

10. The process for gas separation of claim 9, wherein the plurality of carriages and the gaseous mixture move in counter-current direction in at least one of the zone.

11. The process for gas separation of claim 9, wherein the plurality of carriages associated with the adsorption zone carrying the sorbent material traverses via the locomotion means with minimal gap between two or more carriages from among the plurality of carriages by,
opening the inlet one-way valve and the outlet one-way valve of each carriage carrying the sorbent material;
receiving via at least one inlet port of the adsorption zone the gaseous mixture, and the sorbent material present inside each carriage adsorbs the target gas from the gaseous mixture; and
discharging raffinate of the gaseous mixture through at least one outlet port of the adsorption zone.

12. The process for gas separation of claim 9, wherein in the desorption zone, the front end and the rear end of each carriage carrying the sorbent material is opened while traversing via the locomotion means, and the gap between two or more carriages is increased to desorb the target gas.

13. The process for gas separation of claim 9, wherein the sorbent material residing inside the plurality of carriages have no relative motion among themselves, resulting in minimal particle attrition.

14. The process for gas separation of claim 9, wherein the modular true moving bed apparatus facilitates at least one of (i) a temperature swing adsorption, (ii) a pressure swing adsorption, (iii) a vacuum swing adsorption or (iv) a combination thereof.

15. The process for gas separation of claim 14, wherein in the desorption zone, (i) the temperature swing adsorption allows desorption of the target gas by passing a hot gas, (ii) the pressure swing adsorption allows desorption of the target gas by applying low pressure, and (iii) the vacuum swing adsorption allows desorption of the target gas by applying vacuum.

16. The process for gas separation of claim 9, wherein the plurality of zones comprises at least one of: (i) a cooling zone, or (ii) a maintenance zone, wherein the adsorption zone and the desorption zone are connected with the cooling zone and the maintenance zone in series of a closed loop,
wherein the cooling zone cools the sorbent material present inside each carriage using a cooling gas that enters via at least one inlet port and exits as warm gas via at least one outlet port, and the carriage have the front end one-way valve and the rear end one-way valve opened while moving in series via the locomotion means in counter-current direction, and
wherein the maintenance zone provides configuration aids for continuity of operations by replacing depleted carriages with new carriage using a suitable mechanism.

## Patentansprüche

1. Modulare echte Bewegtbettvorrichtung (100) zur Gastrennung, umfassend:
ein statisches gasdichtes Gehäuse (102), das ein Außenmantel ist, der Gasaustritt in die äußere Umgebung verhindert;
ein Fortbewegungsmittel (104);
eine Mehrzahl von Wagen (106a, 106b, ..., 106n), die in der Lage sind, über das Fortbewegungsmittel (104) zu verfahren, wobei das Fortbewegungsmittel (104) und die Mehrzahl von Wagen (106a, 106b, ..., 106n) in dem statischen gasdichten Gehäuse (102) mit engen Toleranzen eingeschlossen sind, so dass es keinen Gasaustritt über Abschnitte gibt;
wobei jeder der Mehrzahl von Wagen (106a, 106b, ..., 106n) ein vorderes Ende mit einem Einlass-Einwegventil und ein hinteres Ende mit einem Auslass-Einwegventil umfasst und jeder der Mehrzahl von Wagen ein Sorptionsmaterial trägt, wobei das Fortbewegungsmittel (104) einen Mechanismus zum Einstellen eines Abstands zwischen zwei aufeinanderfolgenden Wagen aus der Mehrzahl von Wagen während der Bewegung bereitstellt; und
eine Mehrzahl von Zonen, umfassend eine Adsorptionszone (108) und eine Desorptionszone (110), die in einer geschlossenen Schleife in Reihe geschaltet sind, wobei die Mehrzahl von Wagen (106a, 106b, ..., 106n) durch die Mehrzahl von Zonen verfahren und jede der Mehrzahl von Zonen mindestens eine Einlassöffnung zum Zuführen eines gasförmigen Gemischs und mindestens eine Auslassöffnung zum Auslassen von Raffinat umfasst,
wobei jeder der Mehrzahl von Wagen (106a, 106b, ..., 106n), der das Sorptionsmaterial trägt, über das Fortbewegungsmittel während des Gastrennungsprozesses durch jede Zone verfahren,
wobei die Adsorptionszone (108) ein gasförmiges Gemisch von mindestens einer der Einlassöffnung empfängt und jeder der Mehrzahl von Wagen (106a, 106b, ..., 106n), der das Sorptionsmaterial trägt, ein Zielgas aus dem gasförmigen Gemisch adsorbiert, während er über das Fortbewegungsmittel (104) verfahren,
wobei die Desorptionszone (110) das Zielgas aus dem Sorptionsmaterial desorbiert, das in jedem der Mehrzahl von Wagen (106a, 106b, ..., 106n) vorhanden ist, und
wobei ein Dichtungsmechanismus das Einlass-Einwegventil und das Auslass-Einwegventil jedes der Mehrzahl von Wagen, der das Sorptionsmaterial trägt, abdichtet, um einen Austritt in den angrenzenden Zonen zu verhindern.

2. Modulare echte Bewegtbettvorrichtung (100) zur Gastrennung nach Anspruch 1, wobei sich die Mehrzahl von Wagen und das gasförmige Gemisch in mindestens einer der Zonen in Gegenstromrichtung bewegen.

3. Modulare echte Bewegtbettvorrichtung (100) zur Gastrennung nach Anspruch 1, wobei die Mehrzahl von Wagen, die der Adsorptionszone (108) zugeordnet sind, die das Sorptionsmaterial trägt, über das Fortbewegungsmittel (104) mit minimalem Abstand zwischen zwei oder mehr Wagen aus der Mehrzahl von Wagen verfahren, indem
das Einlass-Einwegventil und das Auslass-Einwegventil jedes Wagens, der das Sorptionsmaterial trägt, geöffnet werden;
über mindestens eine Einlassöffnung der Adsorptionszone (108) das gasförmige Gemisch empfangen wird und das Sorptionsmaterial, das in jedem Wagen vorhanden ist, das Zielgas aus dem gasförmigen Gemisch adsorbiert; und
Raffinat des gasförmigen Gemischs durch mindestens eine Auslassöffnung der Adsorptionszone (108) abgegeben wird.

4. Modulare echte Bewegtbettvorrichtung (100) zur Gastrennung nach Anspruch 1, wobei in der Desorptionszone (110) das vordere Ende und das hintere Ende jedes Wagens, der das Sorptionsmaterial trägt, geöffnet werden, während sie über das Fortbewegungsmittel verfahren, und der Abstand zwischen zwei oder mehr Wagen vergrößert wird, um das Zielgas zu desorbieren.

5. Modulare echte Bewegtbettvorrichtung (100) zur Gastrennung nach Anspruch 1, wobei das Sorptionsmaterial, das sich in der Mehrzahl von Wagen befindet, keine Relativbewegung zwischen sich aufweist, was zu minimalem Partikelabrieb führt.

6. Modulare echte Bewegtbettvorrichtung (100) zur Gastrennung nach Anspruch 1, wobei die modulare echte Bewegtbettvorrichtung mindestens eines von (i) einer Temperaturwechseladsorption, (ii) einer Druckwechseladsorption, (iii) einer Vakuumwechseladsorption oder (iv) einer Kombination davon erleichtert.

7. Modulare echte Bewegtbettvorrichtung (100) zur Gastrennung nach Anspruch 6, wobei in der Desorptionszone (110) (i) die Temperaturwechseladsorption die Desorption des Zielgases durch Leiten eines heißen Gases ermöglicht, (ii) die Druckwechseladsorption die Desorption des Zielgases durch Anlegen von Niederdruck ermöglicht und (iii) die Vakuumwechseladsorption die Desorption des Zielgases durch Anlegen von Vakuum ermöglicht.

8. Modulare echte Bewegtbettvorrichtung (100) zur Gastrennung nach Anspruch 1, wobei die Mehrzahl von Zonen mindestens eines von (i) einer Kühlzone (112) oder (ii) einer Wartungszone (114) umfasst, wobei die Adsorptionszone (108) und die Desorptionszone (110) mit der Kühlzone (112) und der Wartungszone (114) in Reihe der geschlossenen Schleife verbunden sind,
wobei die Kühlzone (112) das Sorptionsmaterial, das sich in jedem Wagen befindet, unter Verwendung eines Kühlgases kühlt, das über mindestens eine Einlassöffnung eintritt und als warmes Gas über mindestens eine Auslassöffnung austritt, und der Wagen das vordere Einweg-Einwegventil und das hintere Einweg-Einwegventil geöffnet hat, während sie sich in Reihe über das Fortbewegungsmittel in Gegenstromrichtung bewegen, und
wobei die Wartungszone (114) Konfigurationshilfen für die Kontinuität von Vorgängen bereitstellt, indem erschöpfte Wagen durch neue Wagen unter Verwendung eines geeigneten Mechanismus ersetzt werden.

9. Verfahren zur Gastrennung, das mindestens in einer modularen echten Bewegtbettvorrichtung (100) zur Gastrennung nach Anspruch 1 durchgeführt wird, umfassend:
Bewegen durch eine Mehrzahl von Wagen, die ein Sorptionsmaterial tragen, durch eine Mehrzahl von Zonen über ein Fortbewegungsmittel, um mindestens eine von einer Adsorptionszone und einer Desorptionszone zu erreichen;
Zuführen über mindestens eine Einlassöffnung der Adsorptionszone eines gasförmigen Gemischs über die Mehrzahl von Wagen, die das Sorptionsmaterial tragen;
Adsorbieren eines Zielgases aus dem gasförmigen Gemisch durch das Sorptionsmaterial, während es durch die Adsorptionszone strömt, wenn die Mehrzahl von Wagen über das Fortbewegungsmittel in der Adsorptionszone verfahren;
Desorbieren des Zielgases aus dem Sorptionsmaterial, das in jedem Wagen in der Desorptionszone vorhanden ist; und
Abdichten unter Verwendung eines geeigneten Dichtungsmechanismus des Einlass-Einwegventils und des Auslass-Einwegventils jedes Wagens, der das Sorptionsmaterial trägt, während des Austritts aus mindestens einer Zone, um einen Austritt mit den angrenzenden Zonen zu verhindern.

10. Verfahren zur Gastrennung nach Anspruch 9, wobei sich die Mehrzahl von Wagen und das gasförmige Gemisch in mindestens einer der Zonen in Gegenstromrichtung bewegen.

11. Verfahren zur Gastrennung nach Anspruch 9, wobei die Mehrzahl von Wagen, die der Adsorptionszone zugeordnet sind, die das Sorptionsmaterial trägt, über das Fortbewegungsmittel mit minimalem Abstand zwischen zwei oder mehr Wagen aus der Mehrzahl von Wagen verfahren, indem
das Einlass-Einwegventil und das Auslass-Einwegventil jedes Wagens, der das Sorptionsmaterial trägt, geöffnet werden;
über mindestens eine Einlassöffnung der Adsorptionszone das gasförmige Gemisch empfangen wird und das Sorptionsmaterial, das in jedem Wagen vorhanden ist, das Zielgas aus dem gasförmigen Gemisch adsorbiert; und
Raffinat des gasförmigen Gemischs durch mindestens eine Auslassöffnung der Adsorptionszone abgegeben wird.

12. Verfahren zur Gastrennung nach Anspruch 9, wobei in der Desorptionszone das vordere Ende und das hintere Ende jedes Wagens, der das Sorptionsmaterial trägt, geöffnet werden, während sie über das Fortbewegungsmittel verfahren, und der Abstand zwischen zwei oder mehr Wagen vergrößert wird, um das Zielgas zu desorbieren.

13. Verfahren zur Gastrennung nach Anspruch 9, wobei das Sorptionsmaterial, das sich in der Mehrzahl von Wagen befindet, keine Relativbewegung zwischen sich aufweist, was zu minimalem Partikelabrieb führt.

14. Verfahren zur Gastrennung nach Anspruch 9, wobei die modulare echte Bewegtbettvorrichtung mindestens eines von (i) einer Temperaturwechseladsorption, (ii) einer Druckwechseladsorption, (iii) einer Vakuumwechseladsorption oder (iv) einer Kombination davon erleichtert.

15. Verfahren zur Gastrennung nach Anspruch 14, wobei in der Desorptionszone (i) die Temperaturwechseladsorption die Desorption des Zielgases durch Leiten eines heißen Gases ermöglicht, (ii) die Druckwechseladsorption die Desorption des Zielgases durch Anlegen von Niederdruck ermöglicht und (iii) die Vakuumwechseladsorption die Desorption des Zielgases durch Anlegen von Vakuum ermöglicht.

16. Verfahren zur Gastrennung nach Anspruch 9, wobei die Mehrzahl von Zonen mindestens eines von (i) einer Kühlzone oder (ii) einer Wartungszone umfasst, wobei die Adsorptionszone und die Desorptionszone mit der Kühlzone und der Wartungszone in Reihe einer geschlossenen Schleife verbunden sind,
wobei die Kühlzone das Sorptionsmaterial, das sich in jedem Wagen befindet, unter Verwendung eines Kühlgases kühlt, das über mindestens eine Einlassöffnung eintritt und als warmes Gas über mindestens eine Auslassöffnung austritt, und der Wagen das vordere Einweg-Einwegventil und das hintere Einweg-Einwegventil geöffnet hat, während sie sich in Reihe über das Fortbewegungsmittel in Gegenstromrichtung bewegen, und
wobei die Wartungszone Konfigurationshilfen für die Kontinuität von Vorgängen bereitstellt, indem erschöpfte Wagen durch neue Wagen unter Verwendung eines geeigneten Mechanismus ersetzt werden.

## Revendications

1. Appareil modulaire à lit mobile réel (100) pour la séparation de gaz, comprenant :
une enceinte statique étanche aux gaz (102) qui est une enveloppe extérieure empêchant les fuites de gaz vers l'environnement extérieur ;
un moyen de locomotion (104) ;
une pluralité de chariots (106a, 106b, ..., 106n) capables de se déplacer par l'intermédiaire du moyen de locomotion (104), dans lequel le moyen de locomotion (104) et la pluralité de chariots (106a, 106b, ..., 106n) sont enfermés dans l'enceinte statique étanche aux gaz (102) avec des tolérances étroites de sorte qu'il n'y ait pas de fuites de gaz à travers les sections ;
dans lequel chacun de la pluralité de chariots (106a, 106b, ..., 106n) comprend une extrémité avant ayant une soupape unidirectionnelle d'entrée, et une extrémité arrière ayant une soupape unidirectionnelle de sortie, et chacun de la pluralité de chariots porte un matériau sorbant, dans lequel le moyen de locomotion (104) fournit un mécanisme pour ajuster une distance entre deux chariots consécutifs parmi la pluralité de chariots lorsqu'ils sont en mouvement ; et
une pluralité de zones comprenant une zone d'adsorption (108) et une zone de désorption (110), connectées en série dans une boucle fermée, dans lequel la pluralité de chariots (106a, 106b, ..., 106n) se déplacent à travers la pluralité de zones, et chacune de la pluralité de zones comprend au moins un orifice d'entrée pour alimenter un mélange gazeux et au moins un orifice de sortie pour décharger le raffinat,
dans lequel chacun de la pluralité de chariots (106a, 106b, ..., 106n) portant le matériau sorbant se déplace par l'intermédiaire du moyen de locomotion à travers chaque zone pendant le processus de séparation de gaz,
dans lequel la zone d'adsorption (108) reçoit un mélange gazeux à partir d'au moins l'un de l'orifice d'entrée, et chacun de la pluralité de chariots (106a, 106b, ..., 106n) portant le matériau sorbant adsorbe un gaz cible à partir du mélange gazeux tout en se déplaçant par l'intermédiaire du moyen de locomotion (104),
dans lequel la zone de désorption (110) désorbe le gaz cible à partir du matériau sorbant présent à l'intérieur de chacun de la pluralité de chariots (106a, 106b, ..., 106n), et
dans lequel un mécanisme d'étanchéité scelle la soupape unidirectionnelle d'entrée et la soupape unidirectionnelle de sortie de chacun de la pluralité de chariots portant le matériau sorbant pour empêcher les fuites dans les zones attenantes.

2. Appareil modulaire à lit mobile réel (100) pour la séparation de gaz selon la revendication 1, dans lequel la pluralité de chariots et le mélange gazeux se déplacent dans une direction à contre-courant dans au moins l'une de la zone.

3. Appareil modulaire à lit mobile réel (100) pour la séparation de gaz selon la revendication 1, dans lequel la pluralité de chariots associés à la zone d'adsorption (108) portant le matériau sorbant se déplace par l'intermédiaire du moyen de locomotion (104) avec un espace minimal entre deux chariots ou plus parmi la pluralité de chariots en :
ouvrant la soupape unidirectionnelle d'entrée et la soupape unidirectionnelle de sortie de chaque chariot portant le matériau sorbant ;
recevant par l'intermédiaire d'au moins un orifice d'entrée de la zone d'adsorption (108) le mélange gazeux, et le matériau sorbant présent à l'intérieur de chaque chariot adsorbe le gaz cible à partir du mélange gazeux ; et
déchargeant le raffinat du mélange gazeux à travers au moins un orifice de sortie de la zone d'adsorption (108).

4. Appareil modulaire à lit mobile réel (100) pour la séparation de gaz selon la revendication 1, dans lequel dans la zone de désorption (110), l'extrémité avant et l'extrémité arrière de chaque chariot portant le matériau sorbant sont ouvertes tout en se déplaçant par l'intermédiaire du moyen de locomotion, et l'espace entre deux chariots ou plus est augmenté pour désorber le gaz cible.

5. Appareil modulaire à lit mobile réel (100) pour la séparation de gaz selon la revendication 1, dans lequel le matériau sorbant résidant à l'intérieur de la pluralité de chariots n'a aucun mouvement relatif par rapport à eux, résultant en une attrition de particules minimale.

6. Appareil modulaire à lit mobile réel (100) pour la séparation de gaz selon la revendication 1, dans lequel l'appareil modulaire à lit mobile réel facilite au moins l'une parmi (i) une adsorption modulée en température, (ii) une adsorption modulée en pression, (iii) une adsorption modulée en vide ou (iv) une combinaison de celles-ci.

7. Appareil modulaire à lit mobile réel (100) pour la séparation de gaz selon la revendication 6, dans lequel dans la zone de désorption (110), (i) l'adsorption modulée en température permet la désorption du gaz cible en faisant passer un gaz chaud, (ii) l'adsorption modulée en pression permet la désorption du gaz cible en appliquant une basse pression, et (iii) l'adsorption modulée en vide permet la désorption du gaz cible en appliquant un vide.

8. Appareil modulaire à lit mobile réel (100) pour la séparation de gaz selon la revendication 1, dans lequel la pluralité de zones comprend au moins l'une parmi : (i) une zone de refroidissement (112), ou (ii) une zone de maintenance (114), dans lequel la zone d'adsorption (108) et la zone de désorption (110) sont connectées à la zone de refroidissement (112) et à la zone de maintenance (114) en série au sein de la boucle fermée,
dans lequel la zone de refroidissement (112) refroidit le matériau sorbant présent à l'intérieur de chaque chariot en utilisant un gaz de refroidissement qui entre via au moins un orifice d'entrée et sort sous forme de gaz chaud via au moins un orifice de sortie, et le chariot a la soupape unidirectionnelle d'extrémité avant et la soupape unidirectionnelle d'extrémité arrière ouvertes tout en se déplaçant en série via le moyen de locomotion dans une direction à contre-courant, et
dans lequel la zone de maintenance (114) fournit des aides de configuration pour la continuité des opérations en remplaçant les chariots épuisés par un nouveau chariot en utilisant un mécanisme approprié.

9. Processus de séparation de gaz conduit au moins dans un appareil modulaire à lit mobile réel (100) pour la séparation de gaz selon la revendication 1, comprenant :
le déplacement par une pluralité de chariots portant un matériau sorbant à travers une pluralité de zones via un moyen de locomotion pour atteindre au moins l'une parmi une zone d'adsorption, et une zone de désorption ;
l'alimentation via au moins un orifice d'entrée de la zone d'adsorption, d'un mélange gazeux sur la pluralité de chariots portant le matériau sorbant ;
l'adsorption d'un gaz cible à partir du mélange gazeux par le matériau sorbant tout en passant à travers la zone d'adsorption lorsque la pluralité de chariots se déplacent par l'intermédiaire du moyen de locomotion dans la zone d'adsorption ;
la désorption du gaz cible à partir du matériau sorbant présent à l'intérieur de chaque chariot dans la zone de désorption ; et
l'étanchéité à l'aide d'un mécanisme d'étanchéité approprié, de la soupape unidirectionnelle d'entrée et de la soupape unidirectionnelle de sortie de chaque chariot portant le matériau sorbant pendant la sortie d'au moins une zone pour empêcher les fuites avec les zones attenantes.

10. Processus de séparation de gaz selon la revendication 9, dans lequel la pluralité de chariots et le mélange gazeux se déplacent dans une direction à contre-courant dans au moins l'une de la zone.

11. Processus de séparation de gaz selon la revendication 9, dans lequel la pluralité de chariots associés à la zone d'adsorption portant le matériau sorbant se déplace par l'intermédiaire du moyen de locomotion avec un espace minimal entre deux chariots ou plus parmi la pluralité de chariots en :
ouvrant la soupape unidirectionnelle d'entrée et la soupape unidirectionnelle de sortie de chaque chariot portant le matériau sorbant ;
recevant par l'intermédiaire d'au moins un orifice d'entrée de la zone d'adsorption le mélange gazeux, et le matériau sorbant présent à l'intérieur de chaque chariot adsorbe le gaz cible à partir du mélange gazeux ; et
déchargeant le raffinat du mélange gazeux à travers au moins un orifice de sortie de la zone d'adsorption.

12. Processus de séparation de gaz selon la revendication 9, dans lequel dans la zone de désorption, l'extrémité avant et l'extrémité arrière de chaque chariot portant le matériau sorbant sont ouvertes tout en se déplaçant par l'intermédiaire du moyen de locomotion, et l'espace entre deux chariots ou plus est augmenté pour désorber le gaz cible.

13. Processus de séparation de gaz selon la revendication 9, dans lequel le matériau sorbant résidant à l'intérieur de la pluralité de chariots n'a aucun mouvement relatif par rapport à eux, résultant en une attrition de particules minimale.

14. Processus de séparation de gaz selon la revendication 9, dans lequel l'appareil modulaire à lit mobile réel facilite au moins l'une parmi (i) une adsorption modulée en température, (ii) une adsorption modulée en pression, (iii) une adsorption modulée en vide ou (iv) une combinaison de celles-ci.

15. Processus de séparation de gaz selon la revendication 14, dans lequel dans la zone de désorption, (i) l'adsorption modulée en température permet la désorption du gaz cible en faisant passer un gaz chaud, (ii) l'adsorption modulée en pression permet la désorption du gaz cible en appliquant une basse pression, et (iii) l'adsorption modulée en vide permet la désorption du gaz cible en appliquant un vide.

16. Processus de séparation de gaz selon la revendication 9, dans lequel la pluralité de zones comprend au moins l'une parmi : (i) une zone de refroidissement, ou (ii) une zone de maintenance, dans lequel la zone d'adsorption et la zone de désorption sont connectées à la zone de refroidissement et à la zone de maintenance en série d'une boucle fermée,
dans lequel la zone de refroidissement refroidit le matériau sorbant présent à l'intérieur de chaque chariot en utilisant un gaz de refroidissement qui entre via au moins un orifice d'entrée et sort sous forme de gaz chaud via au moins un orifice de sortie, et le chariot a la soupape unidirectionnelle d'extrémité avant et la soupape unidirectionnelle d'extrémité arrière ouvertes tout en se déplaçant en série via le moyen de locomotion dans une direction à contre-courant, et
dans lequel la zone de maintenance fournit des aides de configuration pour la continuité des opérations en remplaçant les chariots épuisés par un nouveau chariot en utilisant un mécanisme approprié.
